# EUROPEAN PATENT SPECIFICATION

(11) **EP 0 636 519 B1**
(45) Date of publication and mention of the grant of the patent: **01.10.1997**
(21) Application number: 94305572.3
(22) Date of filing: 28.07.1994
(51) Int. Cl.: B60R 13/10

(54) **Method and arrangement for assembling front and rear vehicle number plates**
Verfahren und Anordnung zum Zusammenbau der vorderen und hinteren Kennzeichenschilder eines Fahrzeuges
Méthode et dispositif d'assemblage de plaques d'immatriculation avant et arrière d'un véhicule

(30) Priority: 29.07.1993 GB 9315673; 07.10.1993 GB 9320640
(43) Date of publication of application: 01.02.1995
(73) Proprietor: STATEFRESH Ltd., London NW2 7JJ (GB)
(72) Inventor: Harrison, Douglas Victor, Thame, Oxon. 0X9 2AA (GB)
(74) Representative: King, James Bertram

(56) References cited:
- EP-A- 0 102 904
- FR-A- 2 664 547
- GB-A- 1 564 701
- GB-A- 2 026 750
- GB-A- 2 093 622

## Description

The present invention relates to a method of assembling front and rear vehicle number plates and to an arrangement as well as a console or display frame apparatus for carrying out the method.

Methods are known for the assembly of vehicle number plates comprising assembling in a predetermined manner the required characters consisting of letters and numbers with the characters spaced from one another in predetermined fashion by placing tiles of plastics material bearing the required characters onto a reflective panel of plastics material, transferring the characters to the surface of the reflective panel from the tiles and thereafter bonding the surface of the reflective panel to a support plate of transparent plastics material. One such method is disclosed in EP 0102904 A1, and GB1564701A as example.

To facilitate the assembly by the above method, which is usually carried out to a customer's order, a console or display frame may be employed with a work surface and guide members thereon to ensure correct centralisation and alignment, as well as holding the indicia in position. Such means are disclosed in GB 2093622A, GB 2026750A and GB1564701A.

The indicia, usually black, are carried on supporting "tiles" from which they may be transferred to the back plate by pressure once correctly positioned. The edges of adjacent tiles abut to provide a preset regular spacing.

The known art has serious drawbacks where the spacing between tiles needs to be varied to take into account the letter used and the number of characters as well as the size of plate, such parameters being dictated by legislation. This invention overcomes the problems inherent in the known methods.

The solution offered by this invention has quite wide applicability but may well be especially advantageous for a country such as France where it is necessary to comply with certain stringent regulations. From 1st January 1993, vehicle number plates issued in France must be reflective, white for the front and yellow or orange at the rear. Due to the French system of allocating registration numbers, the manufacture of vehicle number plates has to take place at the point of sale and the present invention is well able to cater for this. However, significant problems of size and spacing of characters had to be overcome:-
a) the French registration consists of a group of 2, 3 or 4 numbers, followed by 2 or 3 letters, followed by 2 numbers.
b) The front plate is smaller than the rear plate.
c) Although the characters can be of the same size front and rear, the spacing between letters and numbers is narrower on the front than on the rear plate.
d) All the characters are the same width except M and W which are wider, and 1 which is narrower.

There are 140 different possible combinations which have each been calculated and a start/finish point defined in the range A - S on each scale.

The main object of this invention enables vehicle number plates to be assembled simply, quickly and in a reliable manner and conforming precisely to appropriate vehicular traffic regulations.

According to one aspect of the invention there is provided a method of assembling a front and/or rear vehicle number plate comprising assembling in a predetermined manner the required characters consisting of letters and numbers with the characters spaced from one another in predetermined fashion by placing tiles of plastics material bearing the required characters onto a reflective panel of plastics material, transferring the characters to the surface of the reflective panel from the tiles and thereafter bonding the surface of the reflective panel to a support plate of transparent plastics material, characterised by the spacing of the characters being determined by causing adjacent tiles to be disposed side by side in an abutting relationship or, alternatively, the spacing of the characters is determined by causing adjacent tiles to overlap by a predetermined amount preferably as determined by a mark, sign or line on the tile whereby corresponding marks, signs or lines of adjacent tiles become superimposed, to locate the tiles in the required position.

Preferably the reflective panel is clamped to a support surface whilst placing the tiles thereon and released from the support surface when the transfers have been bonded to the reflective panel and before bonding the surface of the reflective panel to a support plate of plastics material. Usually the tiles will be rectangular. In one possible procedure the spacing of the characters is determined by causing adjacent tiles to be disposed side by side in an abutting relationship; in another possible procedure the spacing of the characters is determined by causing adjacent tiles to overlap by a predetermined amount, for example as determined by a mark, sign or line whereby corresponding marks, signs or lines of adjacent tiles become superimposed, to locate the tiles in the required position. These possibilities are significant where regulations require different dimensions and spatial arrangements of characters for rear and front vehicle number plates.

According to another aspect of the invention there is provided an arrangement for carrying out the method comprising a console or display frame having guide means for alignment and preferably also retaining at least one reflective panel in a required position on the console or frame and calibrated guide means to position tiles bearing characters at predetermined positions on the said reflective panel retained on the console or display frame so as to enable the required assembly of characters on the reflective panel to be made, the spacing of the characters being determined by causing adjacent tiles to be disposed side by side in an abutting relationship or, alternatively, the spacing of the characters is determined by causing adjacent tiles to overlap by a predetermined amount preferably as determined by a mark, sign or line on the tile whereby corresponding marks, signs or lines of adjacent tiles become superimposed, to locate the tiles in the required position.

In yet a further aspect there is provided a console or display frame apparatus for assembly of vehicle number plates by a method in which a reflective backing panel has transferred onto a forward facing display surface thereof the required characters defining the vehicle registration, the characters being carried by a support forming a tile which is laid onto said panel and being releasable from said tile by pressure to transfer the character to the panel surface, the said panel surface being thereafter overlaid by a transparent support plate which is bonded to the panel to form the number plate, characterised in that the console includes a work surface having positioned thereon guide members to locate and retain the corners of the reflective panel, a side of the console having connected thereto and by means of hinges a ruler adapted to securely retain an edge of the reflective panel, the ruler having a centre line reference marking positioned medially of the guide members, an index table for the start of the line of characters to be positioned on the reflective panel, and an index table for the end of the line of characters to be positioned on the reflective panel, there being also provided a reference table which determines the required starting and ending index points according to the number and type of the characters making up the complete vehicle registration, the spacing of the characters being determined by causing adjacent tiles to be disposed side by side in an abutting relationship or, alternatively, the spacing of the characters is determined by causing adjacent tiles to overlap by a predetermined amount preferably as determined by a mark, sign or line on the tile whereby corresponding marks, signs or lines of adjacent tiles become superimposed, to locate the tiles in the required position.

Preferably the console or display frame is made of metal and the calibrated guide means comprises a pivotable magnetic ruler, the ruler being pivotable away from the console or display frame and pivotable towards the console or display frame and held closely thereto by magnetic attraction, the magnetic attraction preferably being provided by a magnetic strip extending along the inside of the ruler so that all tiles along the length of the reflective panel may be correctly positioned when required. Conveniently the console or display panel includes a rack provided with pockets to hold a stock or array of tiles bearing characters. Preferably the arrangement enables rear and front vehicle number plates to be assembled simultaneously.

By way of example a preferred embodiment of the invention will be described with reference to the accompanying drawing which is a plan view of an arrangement for assembling a vehicle number plate.

The illustrated arrangement which follows is especially suitable for assembling high quality car or other vehicle, e.g. motor-cycle, number plates made of plastics material which precisely meet the specifications laid down by relevant authorities. All the components of the illustrated arrangement have been approved and homologated, and the finished number plates will carry any relevant type approval (TP-PR) number.

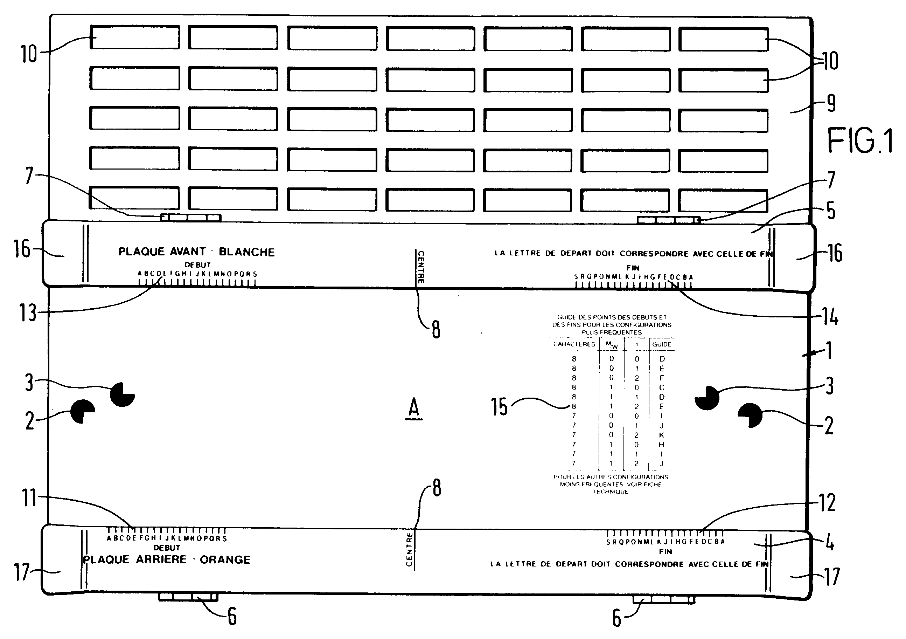

One embodiment is described by way of example only and with reference to the accompanying drawings wherein:-
FIGURE 1, shows in plan view one construction of console for carrying the invention into effect,
FIGURE 2, shows two character transfer tiles in abutting alignment, and
FIGURE 3, shows two tiles in overlapping alignment.

Referring to the drawings the illustrated arrangement which follows comprises a white metallic console or display frame 1 with a work surface A having mounted thereon positioning guide members 2 to locate and retain the upper corners of a reflective panel (not shown) made of plastics material on which vehicle numbers and letters are to be mounted to form a rear vehicle number plate, and similarly mounted thereon positioning guide members 3 to locate and retain the lower corners of a reflective panel (not shown) made of plastics material on which vehicle numbers and letters are to be mounted to form a front vehicle number plate. The reflective panels for the front and rear vehicle number plates can be mounted on the console or frame 1 simultaneously.

A lower magnetic guide ruler 4 is adapted to hold securely the bottom of the lower rear reflective panel by means of a magnetic strip (not shown) provided on the inside of the ruler 4, the magnetic strip extending along the length of the ruler 4 so as to ensure a firm grip on the reflective panel. Hinges 6 enable the ruler 4 to be lifted and opened away from the console or frame 1 when required by handling the finger grips 17. Similarly an upper magnetic guide ruler 5 is adapted to hold securely the top of the upper front reflective panel by means of a magnetic strip (not shown) provided on the inside of the ruler 5, the magnetic strip extending along the length of the ruler 5 so as to ensure a firm grip of the reflective panel. Hinges 7 enable the ruler to be opened away from the console or frame 1 when required by handling the finger grips 16.

The centre line for the console or frame 1 is shown at 8. The upper part of the console or frame 1 takes the form of a rack 9 containing pockets 10 to accommodate an array or stock of vehicle numbers and letters and spacers which take the form of narrow strips for assembling on to the front and rear reflective panels. The console or frame 1 bears a reference table 11 for the start of a rear number panel, a reference table 12 for the end of the rear number panel, a reference table 13 for the start of a front number panel, a reference table 14 for the end of the front number panel and a reference table 15 for determining the correct spacings and disposition of the letters and numbers required.

There will now be described a method for assembling a vehicle number plate utilising the arrangement illustrated and described above.

The final number plate will consist of a reflective panel on which have been mounted in the required disposition a number of characters transferred from tiles of plastics material bearing the appropriate numbers and letters by bonding them to the reflective surface of the reflective panel, and subsequently the underlying surface of the reflective panel will be bonded to a supporting and protective plate of plastics material.

Suitably the support plates will be manufactured in clear polyethylene terephthalate, a virtually unbreakable plastics material. A further preferred material is polymethylmethacrylate. Usually a thin removable protective layer is provided on opposite surfaces of the support plate; on one surface to protect the surface prior to use, and on the opposite adhesive surface to protect the adhesive layer which will be bonded to the reflective panel. A suitable size for the front support plate is 455mm x 100mm and for the rear support plate 520mm x 110mm. Both support plates will have their corners rounded and will be bevelled.

Suitably the reflective panels will be panels of plastics material, the front panel being white and suitably dimensioned 460mm x 106mm and the rear panel being yellow or orange and suitably dimensioned 525 x 116mm. The reflective panels are usually cut a few millimetres longer than the support plates to allow for a margin of error in assembly; the surplus will be trimmed off after bonding the reflective panel to the support plate.

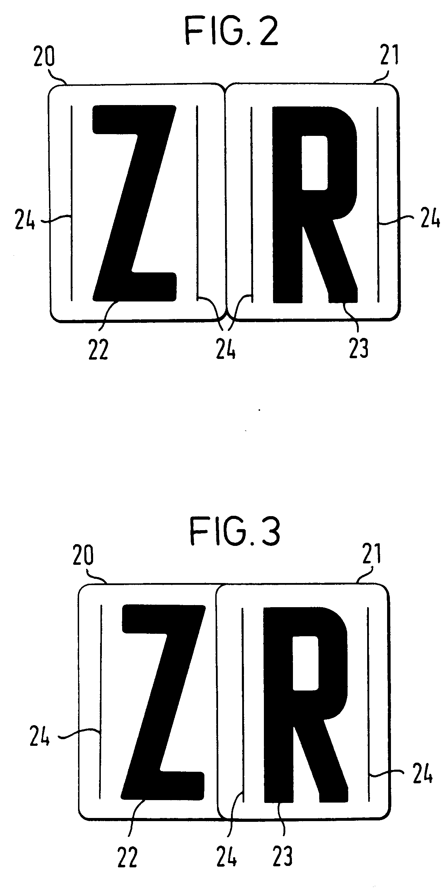

Suitably the tiles containing the requisite pressure transferable, or so-called "rub-down" letters and numbers take the form of thin strips of plastic material 20,21 bearing a letter 22,23 or a number sandwiched between protective sheets as shown in Figs 2 and 3. One surface of the transfer has an adhesive layer for bonding to a reflective panel. Each tile has a vertical line 24 on either side of the character (that is a letter or a number). The vertical lines are used to determine the correct spacing of the characters for the front plates (which are shorter than the rear plates) whereas the vertical lines are ignored when assembling the characters for the rear plates.

Reference will now be made to the drawing. A yellow or orange reflective panel of plastics material dimensioned as mentioned above but not shown, is positioned on the console or frame 1 with its reflective surface uppermost so that the top corners fit into the positioning guide members 2 and the lower edge of the reflective panel is held in place by the lower magnetic guide ruler 4. Similarly a white reflective panel of plastics material dimensioned as mentioned above but not shown is positioned on the console or frame 1 with its reflective surface uppermost so that the bottom corners fit into the positioning guide members 3 and the upper edge of the reflective panel is held in place by the upper magnetic guide ruler 5.

Tables 11 to 15 need to be consulted to determine the starting and finishing points according to the number of characters, the number of letters M or W, and the number of digits 1 in the registration to be made. For instance, a registration of eight characters with one M and one digit 1 will start and finish at the mark "D" on both upper (front plate) and lower (rear plate) scales.

The letters and numbers required for both front and back reflective panels will be extracted selectively from the pockets 10 which will in practice contain them (but not shown) in the rack 9. The tiles, as shown and described with reference to Figs 2 and 3, bearing the required characters will be laid out on each reflective panel, without removing the protective layers from the tiles so that the backing protective layer (which usually takes the form of a transparent or translucent paper) begins and ends at the required marks on the scales (tables 11 to 14). Correct spacing for the rear reflective panel is achieved by abutting successive tiles side by side as in Fig. 2 (tables 11 and 12) and for the front reflective panel is achieved by overlapping adjacent tiles as in Fig. 3 so that the vertical lines become superimposed (tables 13 and 14). Spacing between groups of numbers and letters is achieved by the use of spacers which are narrow strips (not shown).

The underside protective layer may then be removed from each tile in turn and the tile repositioned on the reflective panel, using lightly applied pressure, conveniently with a spatula (not shown). Any incorrectly placed tile can be lifted from the reflective panel with care and replaced. Finally the spacers may be removed. Each reflective panel with its characters mounted thereon (the upper protective layers of the tiles still being in place) may then be passed between rollers (not shown) to ensure uniform adhesion and transfer of the characters themselves onto the respective reflective panel. Thereafter the upper protective layers of the tiles may be removed leaving the characters in place.

The support plates described previously are now used. The protective layer is peeled off from the adhesive layer of the support plate and the adhesive layer of the support plate is held uppermost. Preferably a roller arrangement is used to ensure that the undersurface of the reflective panel with the characters mounted thereon is adhered to the adhesive layer of the support plate. Care and firm pressure will be required to ensure that the finished number plates comply with the standards required. A sharp knife may be used to trim off edges and corners. The protective layer applied to the other surface of the support plate can be peeled from the finished number plate when required.

The arrangement illustrated and described above is also suitable for vehicles such as motor-cycles in France which require only a rear number plate. The same console or display frame 1 may be used but making use only of those features applicable for assembling a rear vehicle number plate. Alternatively a modified console or display frame arrangement may be used wherein lower and upper magnetic guide rulers analogous to rulers 4 and 5 are positioned on the console or display frame 1 to hold an appropriate rear reflective rectangular motor-cycle panel, dispensing with the guide members 2 and 3.

In an alternative construction the transparent support plate may be placed, front surface down, on the console in the manner described for the reflective plate, the tiles placed the tiles placed thereon back to front and the characters transferred to the rear surface of the front support plate. The reflective panel is then adhered to the front plate, which carries the characters, to complete the assembly. This arrangement has the advantage that any misalignment of the reflective panel with the support or front plate does not result in misalignment of the characters relative to the front support plate. This method of assembly of the tiles back to front has proved to be a practical method.

## Claims

1. A method of assembling a front and/or rear vehicle number plate comprising assembling in a predetermined manner the required characters consisting of letters and numbers (22,23) with the characters spaced from one another in predetermined fashion by placing tiles (20,21) of plastics material bearing the required characters onto a reflective panel of plastics material, transferring the characters to the surface of the reflective panel from the tiles and thereafter bonding the surface of the reflective panel to a support plate of transparent plastics material, characterised by the spacing of the characters being determined by causing adjacent tiles (20,21) to be disposed side by side in an abutting relationship or, alternatively, the spacing of the characters is determined by causing adjacent tiles (20,21) to overlap by a predetermined amount preferably as determined by a mark, sign or line (24) on the tile whereby corresponding marks, signs or lines (24) of adjacent tiles (20,21) become superimposed, to locate the tiles in the required position.

2. A method according to Claim 1, characterised in that the reflective panel is clamped to a support surface (A) whilst placing the tiles thereon and released from the support surface (A) when the characters have been transferred and bonded to the reflective panel and before bonding the surface of the reflective panel to a support plate of plastics material.

3. An arrangement for carrying out the method of any preceding claim, characterised by a console or display frame (1) having guide means (2,3) for alignment and preferably also retaining at least one reflective panel in a required position on the console or frame (1) and calibrated guide (11,12,13,14) means to position tiles (20,21) bearing characters (22,23) at predetermined positions on the said reflective panel retained on the console or display frame (1) so as to enable the required assembly of characters (22,23) on the reflective panel to be made, the spacing of the characters being determined by causing adjacent tiles (20,21) to be disposed side by side in an abutting relationship or, alternatively, the spacing of the characters is determined by causing adjacent tiles (20,21) to overlap by a predetermined amount preferably as determined by a mark, sign or line (24) on the tile whereby corresponding marks, signs or lines (24) of adjacent tiles (20,21) become superimposed, to locate the tiles in the required position.

4. An arrangement in accordance with claim 3, characterised in that the console or display frame (1) is made of metal and the calibrated guide means comprises a pivotable magnetic ruler (16,17), the ruler being pivotable (6,7) away from the console or display frame and pivotable (6,7) towards the console or display frame (1) and held closely thereto by magnetic attraction, the magnetic attraction preferably being provided by a magnetic strip extending along the inside of the ruler so that all tiles (20,21) along the length of the reflective panel may be correctly positioned when required.

5. An arrangement according to claim 3 or 4, characterised in that the console or display pane (1) includes a rack (9) provided with pockets (10) to hold a stock or array of tiles (20,21) bearing characters.

6. An arrangement according to claims 3, 4 or 5, characterised in that the console (1) includes two guide means (2,3) for retaining and aligning reflective panels for both rear and front number plates simultaneously, each opposed side of the console including a calibrated guide means (4,5) to position tiles (20,21) on a respective reflective panel.

7. A console or display frame apparatus (1) for assembly of vehicle number plates by a method in which a reflective backing panel has transferred onto a forward facing display surface thereof the required characters (22,23) defining the vehicle registration, the characters being carried by a support forming a tile (20,21) which is laid onto said panel and being releasable from said tile by pressure to transfer the character (22,23) to the panel surface, the said panel surface being thereafter overlaid by a transparent support plate which is bonded to the panel to form the number plate, characterised in that the console (1) includes a work surface (A) having positioned thereon guide members (2,3) to locate and retain the corners of the reflective panel, a side of the console (1) having connected thereto and by means of hinges (6,7) a ruler (4,5) adapted to securely retain an edge of the reflective panel, the ruler (4,5) having a centre line reference marking (8) positioned medially of the guide members (2,3), an index table (11,13) for the start of the line of characters to be positioned on the reflective panel, and an index table (12,14) for the end of the line of characters to be positioned on the reflective panel, there being also provided a reference table (15) which determines the required starting and ending index points (11,13) and (12,14) according to the number and type of the characters (22,23) making up the complete vehicle registration, the spacing of the characters being determined by causing adjacent tiles (20,21) to be disposed side by side in an abutting relationship or, alternatively, the spacing of the characters is determined by causing adjacent tiles (20,21) to overlap by a predetermined amount preferably as determined by a mark, sign or line (24) on the tile whereby corresponding marks, signs or lines (24) of adjacent tiles (20,21) become superimposed, to locate the tiles in the required position.

8. A console or display frame according to claim 7, characterised in that two guide members (2,3) are provided respectively for rear and front number plates, each side of the console having a ruler (4,5) with each ruler having respectively arranged index tables (11,12) and (13,14) which in conjunction with the reference table (15) determine the required starting and ending index points for the rear and front number plates.

9. A console or display frame according to claim 7 or 8, characterised in that the work surface (A) is integral with a storage rack (9) containing a plurality of compartments (10) for holding tiles carrying the characters.

## Patentansprüche

1. Verfahren zum Zusammenbau eines vorderen und/oder hinteren Kennzeichenschildes eines Fahrzeuges, mit in vorbestimmbarer Weise erfolgendem Zusammenfügen von Kennzeichnungsmittel verkörpernden Buchstaben und Zahlen (22, 23) in einem vorgegebenen Abstand voneinander zu einem Kennzeichen, indem Kennzeichnungsmittel tragende Plättchen (20, 21) aus Kunststoff auf eine reflektierende Platte aus Kunststoff aufgelegt und die Kennzeichnungsmittel von den Plättchen auf die Oberfläche der reflektierenden Platte übertragen werden und anschließend die Oberfläche der reflektierenden Platte mit einer Trägerplatte aus durchsichtigem Kunststoff verbunden wird, **dadurch gekennzeichnet,** daß der Abstand der Kennzeichnungsmittel durch Aneinanderreihen von benachbarten Plättchen (20, 21) auf Stoß bestimmt wird oder, daß der Abstand der Kennzeichnungsmittel durch Überlappen benachbarter Plättchen (20, 21) um einen bestimmten Betrag festgelegt ist, der durch eine Markierung, ein Symbol oder eine Linie (24) auf den Plättchen angegeben ist, sodaß einander entsprechende Markierungen, Symbole oder Linien (24) benachbarter Plättchen (20, 21) übereinanderliegend angeordnet sind, um die Plättchen an der gewünschten Stelle zu positionieren.

2. Verfahren nach Anspruch 1, **dadurch gekennzeichnet,** daß die reflektierende Platte auf eine Unterlage (A) geklemmt wird, während die Plättchen darauf angeordnet werden und von der Unterlage (A) nach Übertragung der Kennzeichnungsmittel und deren Verbinden mit der reflektierenden Platte abgenommen werden, bevor die Oberfläche der reflektierenden Platte mit der Trägerplatte aus Kunststoff verklebt wird.

3. Anordnung zur Durchführung des Verfahrens nach einem der vorhergehenden Ansprüche, **gekennzeichnet** durch eine Konsole oder ein Auslegerahmen (1) mit Positionierungsanschlägen (2, 3) für die Ausrichtung, wobei vorzugsweise mindestens eine reflektierende Platte in einer bestimmten Position auf der Konsole oder dem Rahmen (1) gehalten ist und geeichte Ausrichtmittel (11, 12, 13, 14) zur Positionierung der die Kennzeichnungsmittel (22, 23) tragenden Plättchen (20, 21) an vorbestimmten Stellen auf der auf der Konsole oder dem Auslegerahmen (1) gehaltenen reflektierenden Platte, so daß die Kennzeichnungsmittel (22, 23) auf die reflektierende Platte in gewünschter Anordnung aufbringbar sind, wobei der Abstand der Kennzeichnungsmittel durch die Aneinanderreihung von benachbarten Plättchen (20, 21) auf Stoß vorgegeben ist oder der Abstand durch überlappende Anordnung benachbarter Plättchen um einen bestimmten durch eine Markierung, ein Symbol oder ein Linie (24) auf dem Plättchen derart bestimmt ist, daß korrespondierende Markierungen, Symbole oder Linien (24) auf benachbarten Plättchen (20, 21) übereinanderliegend und dadurch die Plättchen an der gewünschten Stelle positioniert sind.

4. Anordnung nach Anspruch 3, **dadurch gekennzeichnet,** daß die Konsole oder der Auslegerahmen (1) aus Metall besteht und die geeichten Ausrichtmittel ein schwenkbares magnetisches Lineal (16, 17) umfassen, das in Bezug auf die Konsole oder den Rahmen nach außen oder nach innen verschwenkbar ist und an diesen durch Magnetwirkung gehalten ist, wobei die magnetische Anziehungskraft vorzugsweise durch einen Magnetstreifen an der inneren Längsseite des Lineals entsteht, so daß alle Plättchen (20, 21) in Längsrichtung der reflektierenden Platte exakt positionierbar sind.

5. Anordnung nach Anspruch 3 oder 4, **dadurch gekennzeichnet,** daß die Konsole oder der Auslegerahmen (1) einen Fächer (10) aufweisenden Setzkasten (9) aufweist, dem ein Vorrat an oder Gruppen von die Kennzeichnungsmittel tragenden Plättchen (20, 21) zugeordnet ist.

6. Anordnung nach den Ansprüchen 3, 4 oder 5, **dadurch gekennzeichnet,** daß die Konsole (1) zwei Positionierungsanschläge (2, 3) zur gleichzeitigen Aufnahme und Ausrichtung reflektierender Platten für das vordere und hintere Kennzeichenschild aufweist, und daß die einander gegenüberliegenden Seiten der Konsole geeichte Ausrichtmittel (4, 5) zur Positionierung der Plättchen (20, 21) auf einer jeweiligen reflektierenden Platte aufweisen.

7. Konsole oder Auslegerahmen (1) zum Zusammenbau von Kennzeichenschildern von Fahrzeugen mittels eines Verfahrens, bei dem auf eine reflektierende Grundplatte auf deren nach außen gerichtete Fläche die erforderlichen Kennzeichnungsmittel (22, 23) zur Fahrzeugkennzeichnung aufgebracht werden, wobei jedes Kennzeichnungsmittel auf einem Träger in Form eines Plättchens (20, 21) aufgebracht ist, das auf die Platte aufgelegt wird und das Kennzeichnungsmittel (22, 23) von dem Plättchen durch Druck auf die Plattenoberfläche übertragbar ist, die anschließend durch eine durchsichtige Stützplatte abgedeckt wird, die mit der Platte zur Bildung des Nummernschildes fest verbunden wird, **dadurch gekennzeichnet,** daß die Konsole (1) eine Arbeitsfläche (A) mit Positionierungsanschlägen (2, 3) zur Positionierung und Sicherung der Ecken der reflektierenden Platte aufweist, wobei eine Seite der Konsole (1) ein über Scharniere (6, 7) befestigtes Lineal (4, 5) aufweist, das eine Kante der reflektierenden Platte festhält, wobei das Lineal (4, 5) eine die Mitte kennzeichnende Markierung (8) trägt, die mittig zwischen den Positionierungsanschlägen (2, 3) liegt und eine Skala (11, 13) zur Angabe des Anfangs der auf der reflektierenden Platte anzubringenden Kennzeichnungszeile sowie eine Skala (12, 14) für das Ende der auf der reflektierenden Platte anzubringenden Kennzeichnungszeile, daß eine Referenztabelle (15) vorgesehen ist, die die erforderlichen Anfangs- und Endpunkte (11, 13) bzw. (12, 14) nach Anzahl und Art der Kennzeichnungsmittel (22, 23) einer vollständigen FahrzeugKennzeichnung bestimmt, wobei der Abstand der Kennzeichnungsbestandteile durch die Aneinanderreihung von benachbarten Plättchen (20, 21) auf Stoß vorgegeben ist oder der Abstand durch überlappende Anordnung benachbarter Plättchen um einen bestimmten durch eine Markierung, ein Symbol oder ein Linie (24) auf dem Plättchen bestimmt wird, sodaß korrespondierende Markierungen, Symbole oder Linien (24) auf benachbarten Plättchen (20, 21) übereinanderliegend und die Plättchen an der gewünschten stelle positionierbar sind.

8. Konsole oder Auslegerahmen nach Anspruch 7, **dadurch gekennzeichnet,** daß zwei Positionierungsanschläge (2, 3) jeweils für die hinteren und vorderen Kennzeichnungsschilder vorgesehen sind, daß jede Seite der Konsole ein Lineal (4, 5) aufweist, von dem jedes eine entsprechend angeordnete Skala (11, 12) bzw. (13, 14) aufweist, die in Verbindung mit der Referenztabelle (15) die erforderlichen Anfangs- und Endpunkte jeweils für das hintere und das vordere Kennzeichnungsschild festlegen.

9. Konsole oder Auslegerahmen nach Anspruch 7 oder 8, **dadurch gekennzeichnet,** daß die Unterlage (A) einstückig mit einem Setzkasten (8) mit einer Vielzahl von Fächern (10) zur Aufnahme von die Kennzeichnungsmittel tragenden Plättchen verbunden ist.

## Revendications

1. Procédé d'assemblage d'une plaque d'immatriculation minéralogique avant et/ou arrière d'un véhicule, ce procédé comprenant l'assemblage, d'une manière prédéterminée, des caractères requis consistant en des lettres et en des nombres (22, 23), avec les caractères espacés l'un de l'autre d'une façon prédéterminée, par placement de carreaux ou de plaquettes (20, 21) d'une matière plastique portant les caractères requis sur un panneau réfléchissant de matière plastique, le transfert des caractères des carreaux sur la surface du panneau réfléchissant, puis la liaison de fixation du panneau réfléchissant sur une plaque de support en de la matière plastique transparente, procédé caractérisé en ce qu'on détermine l'espacement des caractères en provoquant la disposition côte à côte, en une relation d'aboutement de carreaux adjacents (20, 21) ou, en variante, en ce qu'on détermine l'espacement des caractères en obligeant des carreaux adjacents (20, 21) à se chevaucher d'une quantité préférée, déterminée de préférence par une marque, par un signe ou par un trait (24) sur le carreau, de façon à ce que des marques, des signes ou des traits ou lignes (24) correspondants de carreaux adjacents (20, 21) deviennent superposés, pour placer les carreaux en la position requise.

2. Procédé selon la revendication 1, caractérisé en ce que le panneau réfléchissant est fixé par des pinces à une surface de support (A) pendant qu'on place les carreaux sur le panneau, et en ce qu'on relâche le panneau de la surface de support (A) lorsque les caractères ont été transférés et fixés sur le panneau réfléchissant et avant la fixation par collage de la surface des panneaux réfléchissants sur une plaque de support en de la matière plastique.

3. Agencement pour mettre en oeuvre le procédé selon l'une quelconque des revendications précédentes, caractérisé en ce qu'il comporte une console ou un cadre d'affichage (1) ayant des moyens de guidage (2, 3) pour aligner et de préférence retenir également au moins un panneau réfléchissant en une position requise sur la console ou sur le cadre (1) et des moyens de guidage (11, 12, 13, 14) calibrés ou étalonnés pour positionner des carreaux (20, 21), portant des caractères (22, 23), en des positions prédéterminées sur ledit panneau réfléchissant retenu sur la console ou sur le cadre d'affichage (1), de façon à permettre la fabrication de l'assemblage voulu de caractères (22, 23) sur le panneau réfléchissant, l'espacement des caractères étant déterminé par le fait d'obliger des carreaux adjacents (20, 21) à être disposés côte à côte, en une relation d'aboutement ou, en variante, on détermine l'espacement des caractères en obligeant des carreaux adjacents (20, 21) à se chevaucher d'une quantité prédéterminée, de préférence telle que déterminée par une marque, un signe ou une ligne ou une trait (24) sur le carreau, de façon à superposer les marques, signes, lignes ou traits (24) correspondants de carreaux adjacents (20, 21) afin de placer les carreaux en la position requise.

4. Agencement selon la revendication 3, caractérisé en ce que la console ou le cadre d'affichage (1) est en métal et en ce que les moyens calibrés ou étalonnés de guidage comprennent une règle magnétique (16, 17) pouvant pivoter, la règle pouvant pivoter (6, 7) pour s'éloigner de la console ou du cadre d'affichage et pouvant pivoter (6, 7) pour se rapprocher de la console ou du cadre d'affichage (1) et y étant étroitement maintenue par attraction magnétique, l'attraction magnétique étant de préférence fournie par une bande magnétique s'étendant le long de l'intérieur de la règle de façon à pouvoir positionner correctement, quand cela est nécessaire, tous les carreaux (20, 21) le long du panneau réfléchissant.

5. Agencement selon la revendication 3 ou 4, caractérisé en ce que la console ou le panneau d'affichage (1) comprend un râtelier (9) doté de poches (10) pour maintenir un stock ou un ensemble de carreaux (20, 21) portant des caractères.

6. Agencement selon les revendications 3, 4 ou 5, caractérisé en ce que la console (1) comprend deux moyens de guidage (2, 3) pour retenir et aligner simultanément des panneaux réfléchissants pour les plaques d'immatriculation minéralogiques arrière et également avant, chaque côté opposé de la console comprenant un moyen calibré ou étalonné de guidage (4, 5) pour positionner des carreaux (20, 21) sur un panneau réfléchissant respectif.

7. Appareil (1) à console ou cadre d'affichage pour l'assemblage de plaques d'immatriculation minéralogiques de véhicule, par un procédé dans lequel un panneau réfléchissant de support comporte, sur une de ses surfaces d'affichage dirigée vers l'avant, les caractères (22, 23) requis définissant l'immatriculation du véhicule, les caractères étant portés par un support formant un carreau (20, 21) qui est posé sur ledit panneau, et ces caractères pouvant être dégagés dudit carreau par une pression pour transférer le caractère (22, 23) sur une surface du panneau, ladite surface de panneau étant ensuite recouverte d'une plaque transparente de support qui est fixée ou collée au panneau pour former la plaque minéralogique d'immatriculation, appareil caractérisé en ce que la console (1) comprend une surface de travail (A) sur laquelle sont placés des organes de guidage (2, 3) pour situer et retenir les coins du panneau réfléchissant, un côté de la console (1) comportant, reliée à cette console par l'intermédiaire de charnières (6, 7), une règle (4, 5) adaptée pour retenir et fixer de manière sûre un bord du panneau réfléchissant, la règle (4, 5) ayant un marquage de référence (8) formé par une ligne centrale placée au milieu des organes de guidage (2, 3), une table (11, 13) de repérage ou d'indexation pour le début de la ligne des caractères à positionner sur le panneau réfléchissant, et une table de repérage ou d'indexage (12, 14) pour la fin de la ligne des caractères à positionner sur le panneau réfléchissant, l'appareil ou cet ensemble comportant également une table de référence (15) qui détermine le départ et la fin nécessaires des points de repérage ou d'indexation (11, 13) et (12, 14) selon le nombre et le type des caractères (22, 23) constituant l'immatriculation complète du véhicule, l'espacement des caractères étant déterminé par la disposition côte à côte de carreaux adjacents (20, 21) en une relation d'aboutement ou bien, en variante, l'espacement des caractères étant déterminé par le chevauchement, d'une quantité déterminée, de carreaux adjacents (20, 21), chevauchement déterminé par une marque, un signe ou un trait ou une ligne (24) sur le carreau, de manière à superposer des marques, signes ou lignes ou traits (24) correspondants de carreaux adjacents (20, 21) afin de situer les carreaux en la position requise.

8. Console ou cadre d'affichage selon la revendication 7, caractérisée en ce que deux organes de guidage (2, 3) sont prévus respectivement pour les plaques minéralogiques d'immatriculation avant et arrière, chaque côté de la console ayant une règle (4, 5), chaque règle comportant des tables de repérage ou d'indexation (11, 12) et (13, 14), respectivement agencées et qui, de concert avec la table de référence (15), déterminent les points d'indexation de début et de fin nécessaires pour les plaques d'immatriculation minéralogiques avant et arrière.

9. Console ou cadre d'affichage selon la revendication 7 ou 8, caractérisé en ce que la surface de travail (A) fait partie intégrante d'un râtelier de stockage (9) contenant plusieurs compartiments (10) pour loger et maintenir des carreaux portant les caractères.
